# EUROPEAN PATENT APPLICATION

(11) **EP 3 505 810 A1**
(43) Date of publication of application: **03.07.2019**
(21) Application number: 17782420.8
(22) Date of filing: 12.04.2017
(51) Int. Cl.: F21S 8/08, F03D 3/00, F03D 3/06, F03D 9/46, F21S 9/02, F21S 9/03, F21Y 103/10, F21Y 115/10

(54) **HYBRID STREET LIGHT**

(30) Priority: 15.04.2016 JP 2016081645
(71) Applicant: NTN Corporation, Osaka-shi, Osaka 550-0003 (JP)
(72) Inventor: ITO, Takeru, Kuwana-shi Mie 511-8678 (JP); MAEDA, Takeshi, Kuwana-shi Mie 511-8678 (JP)
(74) Representative: Patentanwälte Behrmann Wagner PartG mbB
(86) International application number: PCT/JP2017/014931
(87) International publication number: WO 2017/179607

(57) **Abstract**

Provided is a hybrid street light in which an effect of facilitating use, by people, of a space under illumination is obtained. The hybrid street light includes: a support column; a power generation device main unit including, at an upper portion of the support column, a vertical-axis wind turbine power generation device and a solar photovoltaic power generation device; a lighting device installed around the support column and powered by either or both of the power generation devices; and a seat attached to the support column. In the daytime, power is generated by the solar photovoltaic power generation device. The wind turbine power generation device generates power by day and night as long as wind is available. Since the seat is attached to the support column, an effect of facilitating use, by people, of a space under illumination is obtained.

## Description

### CROSS REFERENCE TO THE RELATED APPLICATION

This application is based on and claims Convention priority to Japanese patent application No. 2016-081645, filed April 15, 2016, the entire disclosure of which is herein incorporated by reference as a part of this application.

### BACKGROUND OF THE INVENTION

### (Field of the Invention)

The present invention relates to a hybrid street light, e.g., a hybrid street light in which electric power generated by a wind turbine power generation device and a solar photovoltaic power generation device are stored in a storage battery, and a lighting device is turned on with use of the power stored in the storage battery.

### (Description of Related Art)

So-called hybrid street lights that each include a wind turbine power generation device and a solar photovoltaic power generation device and that each turn on a lighting device with use of powers obtained by these power generation devices, have been proposed (Patent Documents 1 and 2). As a wind turbine power generation device used in a hybrid street light, a vertical-axis wind turbine power generation device in which control regarding the wind direction is not needed and which is applied to a relatively small-sized wind turbine, is practically used.

### [Related Document]

### [Patent Document]

[Patent Document 1] JP Laid-open Patent Publication No. 2011-40639
[Patent Document 2] JP Laid-open Patent Publication No. 2011-99330

### SUMMARY OF THE INVENTION

A space at a lower area of the aforementioned hybrid street light is a space that is bright even at night and is convenient for use by people day and night. This space is a space where a wind turbine power generation device is installed, and thus the space is generally located in a place that provides, around the space, a clear area that is large to some extent, and examples of the place include an urban district, a park, a promenade, and an area within the site of a factory. However, a space having such an excellent environment is conventionally wastefully left as is, without being effectively used.

An object of the present invention is to provide a hybrid street light in which an effect of facilitating use, by people, of a space under illumination is obtained so that the space can be efficiently used.

A hybrid street light according to the present invention includes: a support column; a power generation device main unit including, at an upper portion of the support column, a wind turbine power generation device of a vertical-axis type and a solar photovoltaic power generation device; a lighting device installed on the support column and configured to be powered by means of either or both of the wind turbine power generation device and the solar photovoltaic power generation device; and a seat attached to the support column.

According to this configuration, the lighting device installed on the support column is powered by means of either or both of the wind turbine power generation device and the solar photovoltaic power generation device. In the daytime during which the sunlight is incident, electric power can be generated by the solar photovoltaic power generation device. The wind turbine power generation device can generate electric power by day and night as long as the wind turbine power generation device receives wind strong enough to rotate blades thereof. Since the wind turbine power generation device is of a vertical-axis type, control regarding the wind direction is not needed, whereby a control system can be made simpler than that of a horizontal-axis type. The vertical-axis wind turbine power generation device can generate electric power by receiving wind even if being relatively small-sized, and thus can be preferably installed in, for example, an urban district, a park, a promenade, or an area within the site of a factory. Therefore, the versatility of the hybrid street light can be improved. The seat is permanently provided to the support column of the hybrid street light, and thus people can sit on the seat by day and night so that it is possible to facilitate use such as taking breaks, chatting with each other, eating and drinking, and placing their belongings on the seat. Therefore, an effect of facilitating use, by people, of the space under illumination is obtained so that the space can be efficiently used.

The wind turbine power generation device may be provided at a portion, of the upper portion of the support column, that is located above the solar photovoltaic power generation device. In this case, the wind turbine power generation device more easily receives wind, whereby the efficiency of power generation by the wind turbine power generation device can be improved.

The lighting device may include a plurality of light-emitting diodes circumferentially arranged around the outer circumference of the support column. In this configuration, in a case where the plurality of light-emitting diodes having been circumferentially arranged illuminate the solar photovoltaic power generation device and the wind turbine power generation device, the position of the hybrid street light is easily recognized at night. In a case where the plurality of light-emitting diodes having been circumferentially arranged illuminate a lower part, the effect of facilitating use by people who sit on the seat is further improved. In a case where the sunlight in a sunshine duration is incident on a plurality of locations in a spotted manner, sunlight having filtered through foliage can be reproduced by means of the light having been incident in a spotted manner.

The seat may be annularly provided around the outer circumference of the support column. In this case, a plurality of persons can sit on the seat, whereby it is possible to facilitate use, by a plurality of persons, of the space under illumination. The lighting device and the seat may be detachably attached to the support column in a state of being combined with each other. In this case, after portions, of the hybrid street light, other than the lighting device and the seat are installed, the lighting device and the seat can be attached to the support column in accordance with, for example, the budget of a user. Since the lighting device and the seat are integrated with each other, operations of attachment and detachment thereof are easy. In addition, the form or the like of the lighting device or the seat can be easily changed in accordance with the preferences of the user who installs the hybrid street light.

In the present invention, the support column may accommodate therein: a storage battery configured to store electric power generated by the wind turbine power generation device and the solar photovoltaic power generation device and to supply the electric power to the lighting device; and a controller configured to control the storage and the supply of the electric power. With this configuration, the present invention becomes compact, and the appearance thereof is improved.

In the present invention, the support column may have: an opening portion through which the storage battery and the controller are inserted and removed; and a door configured to close and open the opening portion. With this configuration, the storage battery and the controller can be easily taken out from and into the support column if the door is opened, and the appearance of the present invention is improved if the door is closed.

In addition, in the present invention, the door may be disposed below the lighting device. With this configuration, the lighting device does not hinder opening and closing of the door.

Furthermore, in the present invention, a housing may be attached to an upper end portion of the support column, the housing being configured to accommodate: a bearing rotatably supporting a turbine rotor of the wind turbine power generation device; and a generator configured to be driven by rotation of the turbine rotor to generate electric power. With this configuration, the wind turbine power generation device becomes compact.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a front view of a hybrid street light according to one embodiment of the present invention;
Fig. 2 is a rear view of the hybrid street light;
Fig. 3 is a right side view of the hybrid street light;
Fig. 4 is a left side view of the hybrid street light;
Fig. 5 is a plan view of the hybrid street light;
Fig. 6 is a bottom view of the hybrid street light;
Fig. 7 is a perspective view of the hybrid street light;
Fig. 8 is a cross-sectional view taken along a line VIII to VIII in Fig. 5;
Fig. 9 is a perspective view showing a lighting device and the like of the hybrid street light; and
Fig. 10 is a block diagram schematically showing a control system of the hybrid street light.

### DESCRIPTION OF EMBODIMENTS

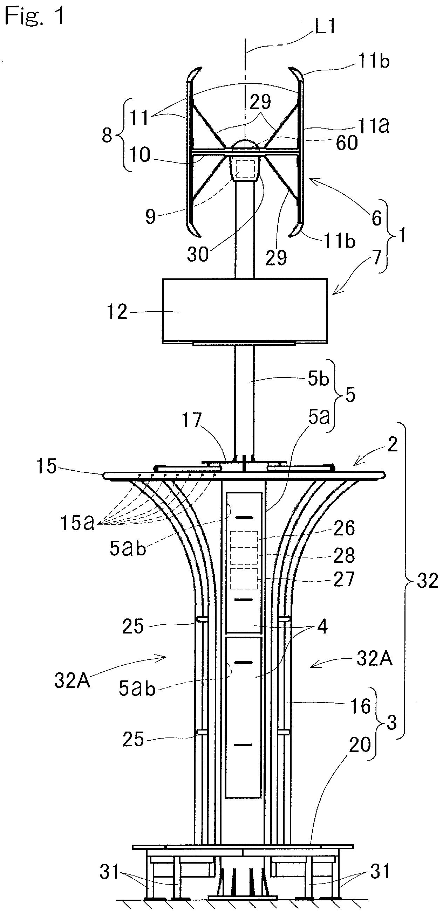

A hybrid street light according to one embodiment of the present invention will be described with reference to Fig. 1 to Fig. 10. As shown in Fig. 1, the hybrid street light includes a power generation device main unit 1, a lighting device 2, a seat 3, a controller 26, a storage battery 27, and an inverter 28. The power generation device body 1 includes a wind turbine power generation device 6 and a solar photovoltaic power generation device 7 which are provided on a support column 5. The support column 5 includes: a support column lower portion 5a installed on the ground and standing so as to extend upward; and a support column upper portion 5b linearly connected to the upper end of the support column lower portion 5a. An upper end portion of the support column lower portion 5a is located at substantially the same position in the vertical direction as that of the lighting device 2. Each of the support column lower portion 5a and the support column upper portion 5b is a columnar hollow cylindrical member. Thus, cables (not shown) and the like of the power generation device body 1 and the lighting device 2 can be led into the support column lower portion 5a and the support column upper portion 5b.

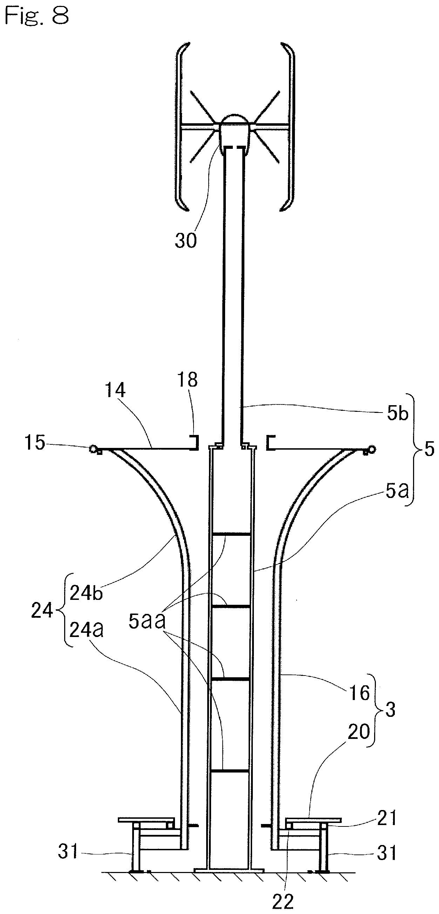

As shown in Fig. 8, the support column lower portion 5a has a larger diameter than that of the support column upper portion 5b, and is provided concentrically with the support column upper portion 5b. Inside the support column lower portion 5a, a plurality of partition walls 5aa are provided so as to be arrayed at appropriate intervals in the longitudinal direction that matches the vertical direction. Each partition wall 5aa is formed in, for example, a shape of an inner-diametric flange that protrudes in the radially inward direction from the inner circumferential surface of the support column lower portion 5a, thereby partitioning the inside space of the support column lower portion 5a. The partition walls 5aa have respective through holes (not shown) formed so as to allow the cables and the like to pass therethrough, for example.

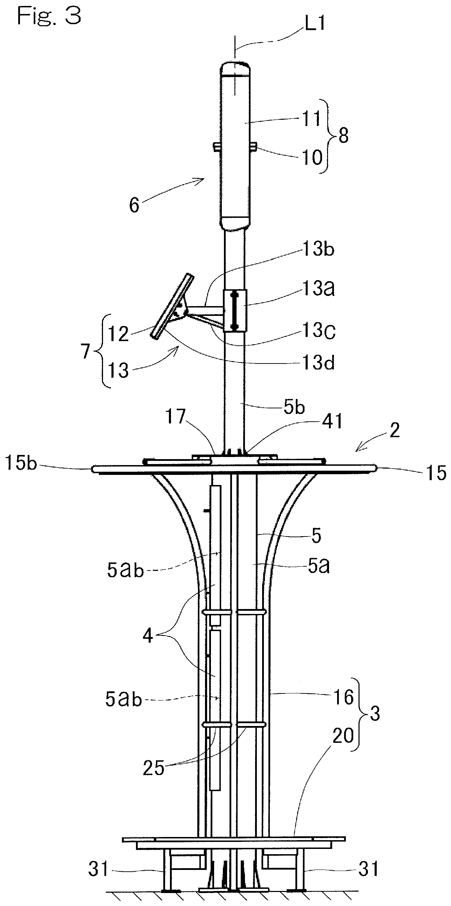

A predetermined partition wall 5aa in the support column lower portion 5a supports the controller 26, the storage battery 27, and the inverter 28 which are described later. The inverter 28 may be omitted. In a case where, for example, a plurality of the storage batteries 27 are provided, these storage batteries 27 are supported by the partition walls 5aa that are different from one another. Therefore, the controllers 26, the storage batteries 27, and the inverters 28 in the support column lower portion 5a are disposed in respective spaces separated from one another by the partition walls 5aa that are different from one another. As shown in Fig. 1 and Fig. 3, a plurality (in this example, two) of opening portions 5ab are formed in the front surface of the support column lower portion 5a, and doors 4 are respectively provided so as to be capable of closing these opening portions 5ab. Each door 4 is disposed below the lighting device 2, and is formed so as to be openable and closable. If each door 4 is brought into an opened state, the controller 26, the storage battery 27, and the inverter 28 can be accessed and operated, and can be inserted and removed through the opening portions 5ab. As shown in Fig. 1, the support column upper portion 5b is provided with the wind turbine power generation device 6 of a vertical-axis type and the solar photovoltaic power generation device 7. The wind turbine power generation device 6 is installed above the solar photovoltaic power generation device 7.

### <Regarding the wind turbine power generation device 6>

The wind turbine power generation device 6 includes a turbine rotor 8, and a generator 9 which is driven by the turbine rotor 8. The turbine rotor 8 includes a support 10 and a plurality of blades 11. The support 10 is supported at an upper end portion of the support column 5 via a bearing 60 so as to be rotatable about a vertical axis. The support 10 is a member supporting the plurality (in this example, two) of blades 11, and is formed in an arm shape so as to extend in the radially outward direction from an upper portion of the support column 5.

One of the blades 11 is connected to one end of the support 10, and the other one of the blades 11 is connected to the other end of the support 10. A plurality (in this example, four) of reinforcement members 29 are provided so as to connect the support 10 and the blades 11. Each reinforcement member 29 diagonally extends so as to reach a portion near the upper or lower end of the blades 11 as the reinforcement member 29 extends in the radially outward direction from portions near the center of the support 10. The two blades 11, 11 respectively extend in the vertical direction, and are provided at positions between which the phase is different by 180 degrees, with the support column 5 being the center.

Each blade 11 extends in the vertical direction, and is configured to be rotated about an axis L1 of the support column 5 by receiving wind from various directions. The blade 11 includes: a straight portion 11a extending straight in the vertical direction; and blade tip portions 11b, 11b respectively extending from both ends, in the longitudinal direction, of the straight portion 11a. The straight portion 11a and each blade tip portion 11b are formed from the same material so as to be integrated with each other. It is noted that the following configuration may be employed: three or more supports 10 each formed in an arm shape extend radially in the radially outward direction from the upper portion of the support column 5, and the blades 11 are respectively provided to the supports 10.

Each blade tip portion 11b is in the form of a so-called winglet, by which a wing tip vortex generated from the corresponding blade tip is reduced. The blade tip portion 11b has a cross section, which is obtained by cutting the blade tip portion 11b along a plane including the axis L1, having a shape inclined so as to progressively approach the support column 5 side from the proximal end thereof toward the distal end thereof. The upper and lower blade tip portions 11b, 11b are formed in the same shape so as to be line-symmetric with respect to the center in the longitudinal direction of the straight portion 11a.

The generator 9 is accommodated, together with the bearing 60, inside a housing 30 attached to the upper end portion of the support column 5, and is driven by rotation of the blades 11 to generate electric power. A stationary ring which is an inner ring of the bearing is attached to the housing 30, and a rotating ring which is an outer ring of the bearing 60 is connected to the support 10. When the blades 11 are rotated, a rotor of the generator 9 is rotated, together with the rotating ring, inside the housing 30, thereby generating power. As the generator 9, an induction generator or a synchronous generator may be used, for example.

### <Regarding the solar photovoltaic power generation device 7>

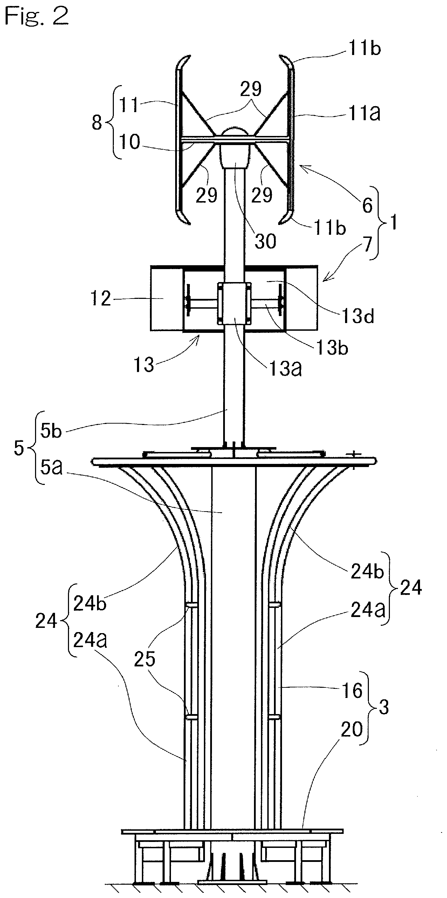

The solar photovoltaic power generation device 7 includes: a solar panel 12 which performs photoelectric conversion by receiving sunlight; and a mount 13 shown in Fig. 2 supporting the solar panel 12. The mount 13 is attached to a portion, of the upper portion of the support column 5, that is located slightly below the turbine rotor 8. The mount 13 includes a cylindrical member 13a, a bracket 13b, a reinforcement member 13c, and a panel support portion 13d. The cylindrical member 13a is fitted and fixed to the outer circumference of the support column upper portion 5b. The cylindrical member 13a includes: two division structures which can be separated from each other so as to each have a half-cylindrical shape; and a plurality of bolts and nuts by means of which these division structures are coupled with each other and fixed to the support column upper portion 5b.

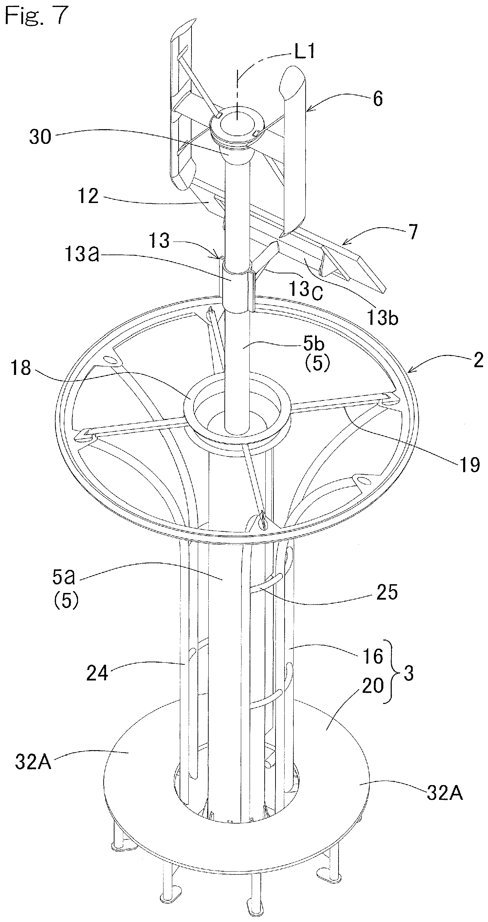

As clearly seen from Fig. 7, the bracket 13b is T-shaped as viewed from above, and a base portion of a leg thereof is fixed so as to extend in the radially outward direction from one of the division structures of the cylindrical member 13a. The reinforcement member 13c which is a single member is attached to a portion ranging from a lower part of the one of the division structures to the distal ends of the bracket 13b. The panel support portion 13d has an angle adjustment mechanism, which is not shown, capable of adjusting the angle of the tilt of the panel support portion 13d and the solar panel 12 relative to the horizontal direction. The panel support portion 13d can be fixed at an arbitrary angle by the angle adjustment mechanism. This angle is determined, as appropriate, in accordance with the irradiation angle of sunlight. It is noted that also the angle, about the axis L1, of the solar panel 12 can be adjusted by temporarily loosening the bolts and nuts of the cylindrical member 13a, turning the two division structures around the axis L1 of the support column upper portion 5b, and fastening the bolts and nuts at an arbitrary angle about the axis L1. The solar panel 12 may be composed of, for example, polycrystalline silicon cells. However, the element for the solar panel 12 is not limited to the polycrystalline silicon cells.

### <Regarding the lighting device 2>

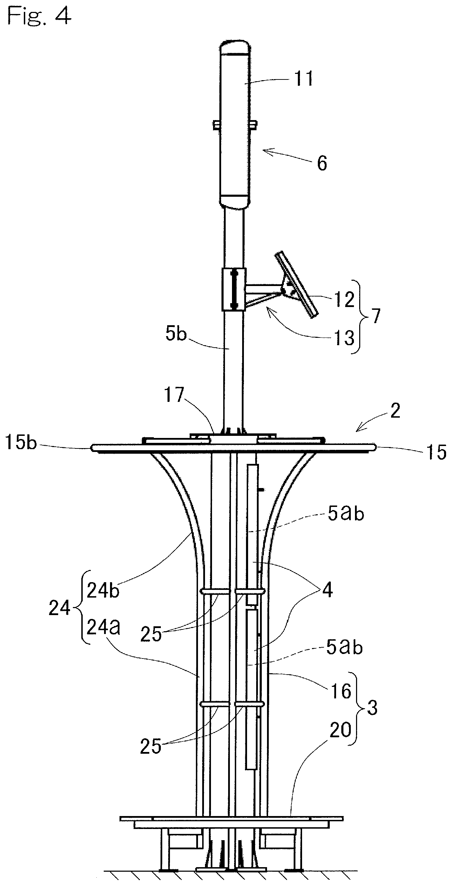

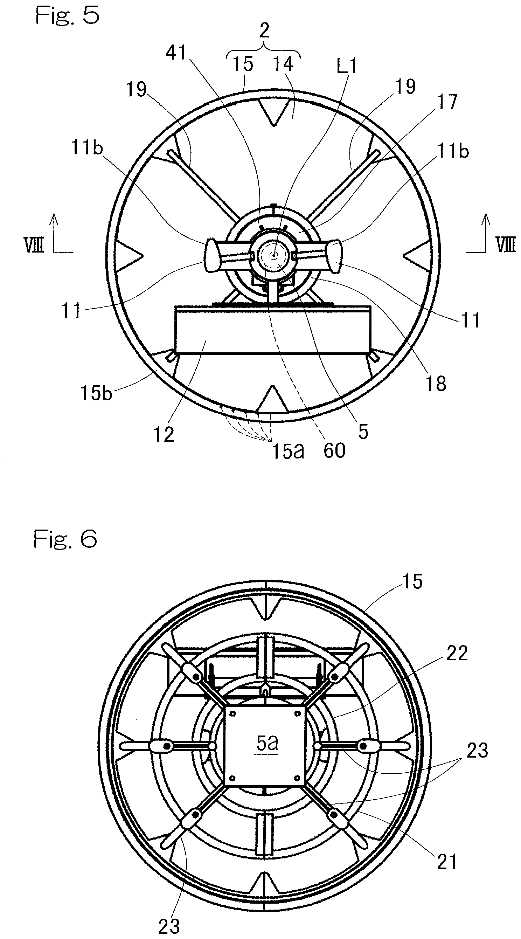

As shown in Fig. 5, the lighting device 2 includes: an annular sheet-like panel 14 annularly disposed around the outer circumference of the support column 5; and an annular light source 15 supported by the panel 14. The panel 14 is not shown in Fig. 7. Specifically, as shown in Fig. 8, an outer-diameter-side portion of the lower surface of the panel 14 is supported by the upper ends of a frame 16 (described later) of the seat 3. A flange 17 is fixed to a lower end portion, on the outer circumference, of the support column upper portion 5b via a plurality of brackets 41 shown in Fig. 4. An annular support member 18 in Fig. 5 is fixed to the lower surface of the flange 17 (Fig. 4) so as to support an inner-diameter-side portion of the panel 14. As described above, the lighting device 2 is positioned above the doors 4, and thus does not hinder opening and closing of the doors 4.

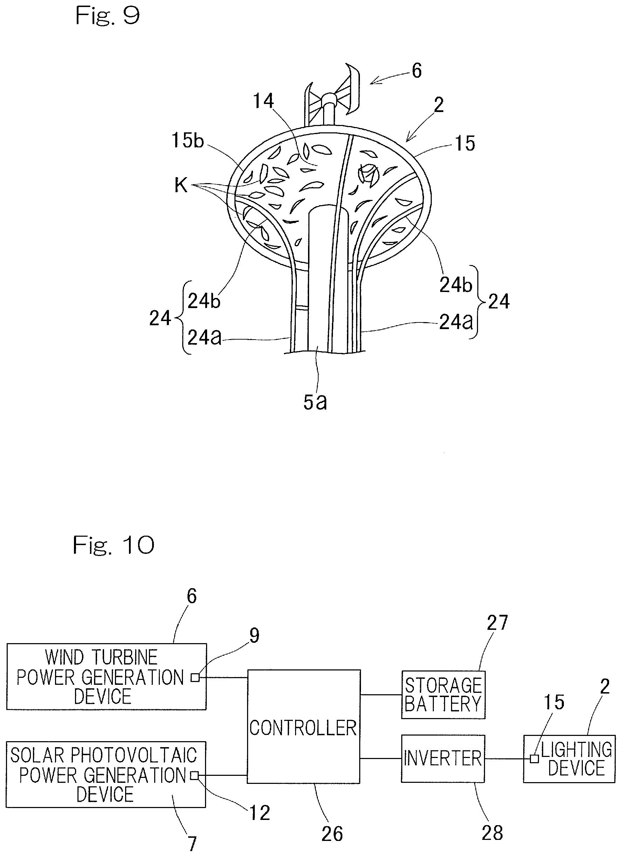

The annular support member 18 is provided with a plurality (in this example, four) of connection members 19 radially extending from the annular support member 18 to the upper ends of the frame 16. Those connection members 19 are arranged at predetermined intervals in the circumferential direction. As shown in Fig. 5 and Fig. 8, the panel 14 is annularly provided around the outer circumference of the support column 5 via the frame 16, the annular support member 18, and the plurality of connection members 19. The annularly provided panel 14 serves also as a protection against rain for people sitting on the seat 3. The panel 14 is made from: a resin material or a glass sheet having light-transmitting property (transparency, or optical transparency with diffusibility) and weather resistance; or a metal or the like. As shown in Fig. 9, for example, a plurality of leaf patterns k are drawn on the panel 14. The leaf patterns k themselves are not optically transparent. Thus, for example, sunlight having filtered through portions, between the plurality of leaf patterns, of the panel 14 having optical transparency can be incident in the daytime. In a case where the panel 14 is made from a metal, sunlight having filtered through foliage can be reproduced if the panel 14 is punched so as to have shapes of leaves by means of a press or the like.

As shown in Fig. 5, the annular light source 15 includes an annular and optically transparent tube 15b, and a plurality of light-emitting diodes (LEDs) 15a accommodated in the tube 15b. Those LEDs 15a are arranged in the tube 15b at intervals in the circumferential direction. In other words, the plurality of LEDs 15a are circumferentially arranged around the outer circumference of the support column 5 at intervals in the circumferential direction. Among the plurality of circumferentially arranged LEDs 15a, some LEDs 15a are arranged so as to emit light upward, and the other LEDs 15a are arranged so as to emit light downward.

The some LEDs 15a for emitting light upward irradiate particularly the solar photovoltaic power generation device 7 and the wind turbine power generation device 6 over the entire circumferences, i.e., 360 degrees. Therefore, the position of the hybrid street light is easily recognized at night. Owing to the other LEDs 15a for emitting light downward, the effect of facilitating use by people who sit on the seat 3 is further improved.

### <Regarding the seat 3>

As shown in Fig. 8, the seat 3 includes: a seat portion 20 provided at a lower part of the hybrid street light; and the frame 16. The seat portion 20 and the frame 16 are provided so as to be integrated with each other by means of, for example, bolts. The seat 3 and the lighting device 2 are formed integrally with each other, but are formed separately from the support column 5. An integrally structured component 32 including the lighting device 2 and the seat 3 is composed of a plurality of division structures arranged in the circumferential direction, e.g., two division structures 32A, 32A which can be separated from each other so as to be halves of the integrally structured component 32 in a plane including the axis L1. Those division structures 32A, 32A are detachably attached to the support column 5 via the flange 17, the annular support member 18, and the like. The two division structures 32A, 32A can be separated from each other so as to be halves of the integrally structured component 32 as described above, and thus are configured to be able to be attached to the support column 5 after the support column 5 is installed.

The frame 16 has leg portions 31, annular base portions 21, 22 shown in Fig. 6, radial connection portions 23, column portions 24 in Fig. 7, and connection portions 25. These portions are integrally connected to each other by means of, for example, bolts. The plurality of annular base portions 21, 22 shown in Fig. 6 and having dimensions in the radial direction that are different from each other, are provided around the outer circumference of the support column lower portion 5a. Those annular base portions 21, 22 are installed so as to be concentric with the support column 5. The radial connection portions 23 integrally connect these annular base portions 21, 22. The plurality of leg portions 31 are fixed to the lower surface of the annular base portion 21, which is one annular base portion of the annular base portions 21, 22 that has a larger diameter, and those leg portions 31 are installed on the ground. The plurality of column portions 24 are provided to the multiple leg portions 31 via attachment members so as to stand. These column portions 24 are arranged at appropriate intervals in the circumferential direction, and serve also as supports for the support column 5.

As shown in Fig. 4, each column portion 24 includes: a linear portion 24a extending from the proximal end side so as to be parallel to the support column lower portion 5a and disposed around an outer circumferential surface of the support column lower portion 5a so as to be spaced from the outer circumferential surface; and a curved portion 24b curved so as to be progressively apart from the support column 5 from an end of the linear portion 24a toward the upper end. The connection portions 25 connect the column portions 24 to each other that are adjacent to each other in the circumferential direction. The outer-diameter-side portion of the lower surface of the panel 14 in Fig. 8 is connected to the tip of the curved portion 24b of each column portion 24. Each column portion 24 of the frame 16 is connected to the support column 5 via the panel 14, the annular support member 18, and the flange 17 (Fig. 4), whereby the stiffness of the entire hybrid street light can be improved.

The seat portion 20 having a shape of a circular sheet is provided on upper portions of the plurality of annular base portions 21, 22. The seat portion 20 has a shape of a circular sheet such that the upper surface thereof serves as a seat surface, and the seat portion 20 is provided around the outer circumference of the support column 5 concentrically with the support column 5. The seat portion 20 is configured such that a plurality of persons can sit thereon. Accordingly, use of the space below the lighting device 2 by a plurality of persons can be facilitated.

### <Regarding the control system>

As shown in Fig. 1, the controller 26 which is a control device, the storage battery 27, and the inverter 28 are provided inside the support column 5, specifically, inside the support column lower portion 5a. As shown in Fig. 10, the controller 26 performs control so as to power the lighting device 2 by means of either or both of the wind turbine power generation device 6 and the solar photovoltaic power generation device 7. The controller 26 includes, for example, a central control unit and a storage unit which are not shown.

The solar panel 12 and the generator 9 of the wind turbine power generation device 6 are electrically connected to the controller 26. Electric power generated by the solar panel 12 and the generator 9 is stored in the storage battery 27 through the controller 26. The controller 26 causes the inverter 28 to convert DC power stored in the storage battery 27 into AC power, thereby supplying the AC power to the lighting device 2. Accordingly, each LED 15 (Fig. 5) is turned on. A timer switch and the like which are not shown are connected to the controller 26. The controller 26 can switch between ON and OFF of each LED 15 (Fig. 5) in accordance with a set time determined by the timer switch.

According to the hybrid street light described above, the lighting device 2 installed on the column 5 in Fig. 7 is powered by means of either or both of the wind turbine power generation device 6 and the solar photovoltaic power generation device 7. In the daytime during which sunlight is incident, electric power can be generated by the solar photovoltaic power generation device 7. The wind turbine power generation device 6 can generate electric power by day and night as long as the wind turbine power generation device 6 receives wind strong enough to rotate the blades 11. Since the wind turbine power generation device 6 is of a vertical-axis type, control regarding the wind direction is not needed, whereby the control system can be made simpler than that of a horizontal-axis type.

The vertical-axis wind turbine power generation device 6 can generate power by receiving wind even if being relatively small-sized, and thus can be preferably installed in, for example, an urban district, a park, a promenade, or an area within the site of a factory. Therefore, the versatility of the hybrid street light can be improved. The seat 3 is permanently provided to the support column 5 of the hybrid street light, and thus people can sit on the seat portion 20 by day and night so that it is possible to facilitate use such as taking breaks, chatting with each other, eating and drinking, and placing their belongings on the seat portion 20. Therefore, an effect of facilitating use, by people, of the space under illumination is obtained so that the space can be efficiently used.

The wind turbine power generation device 6 is provided at a portion, of the upper portion of the support column 5, that is located above the solar photovoltaic power generation device 7. Therefore, the wind turbine power generation device 6 more easily receives wind, whereby the efficiency of power generation by the wind turbine power generation device 6 can be improved.

The integrally structured component 32 including the lighting device 2 and the seat 3 is detachably attached to the support column 5 in a state where the two division structures 32A, 32A are combined with each other. Therefore, after portions, of the hybrid street light, other than the lighting device 2 and the seat 3 are installed, the lighting device 2 and the seat 3 can be attached to the support column 5 in accordance with, for example, the budget of a user. Since the lighting device 2 and the seat 3 are integrated with each other, operations of attachment and detachment thereof are easy. In addition, the form or the like of the lighting device 2 or the seat 3 can be easily changed in accordance with the preferences of the user who installs the hybrid street light.

Although the embodiment has been described above with reference to the accompanying drawings, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1 ····: Power generation device main unit
- 2 ····: Lighting device
- 3 ····: Seat
- 4 ····: Door
- 5 ····: Support column
- 5ab ····: Opening portion
- 6 ····: Wind turbine power generation device
- 7 ····: Solar photovoltaic power generation device
- 8 ····: Turbine rotor
- 15 ····: Light-emitting diode (LED)
- 26 ····: Controller
- 27 ····: Storage battery
- 30 ····: Housing
- 60 ····: Bearing

## Claims

1. A hybrid street light comprising:
a support column;
a power generation device main unit including, at an upper portion of the support column, a wind turbine power generation device of a vertical-axis type and a solar photovoltaic power generation device;
a lighting device installed on the support column and configured to be powered by means of either or both of the wind turbine power generation device and the solar photovoltaic power generation device; and
a seat attached to the support column.

2. The hybrid street light as claimed in claim 1, wherein the wind turbine power generation device is provided at a portion, of the upper portion of the support column, that is located above the solar photovoltaic power generation device.

3. The hybrid street light as claimed in claim 1 or 2, wherein the lighting device includes a plurality of light-emitting diodes circumferentially arranged around the outer circumference of the support column.

4. The hybrid street light as claimed in any one of claims 1 to 3, wherein the seat is annularly provided around the outer circumference of the support column.

5. The hybrid street light as claimed in any one of claims 1 to 4, wherein the lighting device and the seat are detachably attached to the support column in a state of being combined with each other.

6. The hybrid street light as claimed in any one of claims 1 to 5, wherein the support column accommodates therein: a storage battery configured to store electric power generated by the wind turbine power generation device and the solar photovoltaic power generation device and to supply the electric power to the lighting device; and a controller configured to control the storage and the supply of the electric power.

7. The hybrid street light as claimed in claim 6, wherein the support column has: an opening portion through which the storage battery and the controller are inserted and removed; and a door configured to close and open the opening portion.

8. The hybrid street light as claimed in claim 7, wherein the door is disposed below the lighting device.

9. The hybrid street light as claimed in any one of claims 1 to 8, wherein a housing is attached to an upper end portion of the support column, the housing being configured to accommodate: a bearing rotatably supporting a turbine rotor of the wind turbine power generation device; and a generator configured to be driven by rotation of the turbine rotor to generate electric power.
